# EUROPEAN PATENT SPECIFICATION

(11) **EP 3 162 702 B1**
(45) Date of publication and mention of the grant of the patent: **15.05.2019**
(21) Application number: 16192580.5
(22) Date of filing: 06.10.2016
(51) Int. Cl.: B64C 11/12, B64C 39/02, B64C 11/00, B64C 11/04, B63H 1/16

(54) **REDUCED COMPLEXITY RING MOTOR DESIGN FOR PROPELLER DRIVEN VEHICLES**
RINGMOTORKONSTRUKTION MIT REDUZIERTER KOMPLEXITÄT FÜR PROPELLERGETRIEBENE FAHRZEUGE
CONCEPTION DE MOTEUR ANNULAIRE A COMPLEXITÉ RÉDUITE POUR VÉHICULES MUS PAR HÉLICE

(30) Priority: 08.10.2015 US 201514878739
(43) Date of publication of application: 03.05.2017
(73) Proprietor: Lockheed Martin Corporation, Bethesda, Maryland 20817 (US); Cho, Jinsoo, Seoul 06661 (KR)
(72) Inventor: CHO, Jinsoo, 06661 Seoul (KR); SALAMON, Adam C., Landenberg, PA 19350 (US); ALLEN, Edward Henry, Bethesda, MD 20814 (US)
(74) Representative: Grünecker Patent- und Rechtsanwälte PartG mbB

(56) References cited:
- EP-A1- 1 289 831
- GB-A- 2 370 922
- US-A- 2 337 861
- US-A- 5 183 222
- US-A1- 2007 024 060
- US-A1- 2009 293 795
- US-A1- 2015 226 086

## Description

### TECHNICAL FIELD

This disclosure relates in general to motors for propeller driven vehicles and more particularly to a reduced complexity ring motor design for propeller driven vehicles.

### BACKGROUND

In typical propeller driven vehicles, torque is transferred from a motor through a propeller hub and into propeller blades. This transfer of power is associated with large stress forces on the hub, the propeller blades, and the hub-to-blade connection points, as well as power loss due to friction.

US 5,183,222 A discloses a motor according to the preamble of claim 1.

It is the object of the invention to provide an improved way of driving a propeller with a motor.

### SUMMARY OF THE DISCLOSURE

This object is achieved by the subject matter of claim 1. The dependent claims describe advantageous embodiments of the invention.

According to one embodiment, a vehicle includes one or more motors and a control system. Each motor includes a stator and a rotor configured as a rotating propeller. The stator and rotor are connected through the center hub of the rotor which is coupled to a center portion of the stator. The stator includes a support ring and a plurality of windings arranged circumferentially around the support ring. The rotor includes a support ring, a plurality of magnetic poles arranged circumferentially around the support ring, and a plurality of blades. Each blade individually coupled to the rotor support ring. The control system controls the thrust produced by the motor(s) by controlling the electrical power to the windings of the stator thereby causing the rotor to rotate.

Technical advantages of some embodiments may include providing a motor-propeller combination that allows increased operation time between maintenance overhauls (TBO) and greater engine efficiency compared to typical propeller driven vehicles. Some embodiments may reduce the stresses on the hub and hub-to-blade connections. Some embodiments may reduce the power lost during the power transfer from the motor to the propeller. Some embodiments may provide a smaller and lighter-weight motor. Some embodiments may allow for new and more efficient propeller blade designs. Other technical advantages will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present disclosure and its advantages, reference is now made to the following description, taken in conjunction with the accompanying drawings, in which:
FIGURE 1 illustrates an example vehicle that may utilize a reduced complexity ring motor according to certain embodiments;
FIGURES 2 and 3 illustrate one embodiment of a reduced complexity ring motor that may be used in the vehicle of FIGURE 1, according to certain embodiments;
FIGURES 4A and 4B illustrate another embodiment of a reduced complexity ring motor that may be used in the vehicle of FIGURE 1, according to certain embodiments;
FIGURES 5A and 5B illustrate embodiments of a rotor support ring and a stator support ring that may be used in the reduced complexity ring motors of FIGURES 2, 3, 4A, and 4B, according to certain embodiments; and
FIGURE 6 illustrates an example computer system that may be used by the control system of the vehicle of FIGURE 1.

### DETAILED DESCRIPTION OF THE DISCLOSURE

In typical propeller driven vehicles, a propeller is driven from a central point by a motor. Power, in the form of torque, is transferred from the motor through the hub to the propeller blades. While a simple system mechanically, power transfer through the hub may result in lower fuel efficiency due to power lost from friction and other mechanical inefficiencies. Additionally, driving the propeller through the hub exposes the hub-to-propeller components to large stress forces including torque from the engine and torque from the flexing of the propeller blades during operation. Over time, these forces may lead to cracks in the hub, propeller, and hub-to-propeller connection points, thereby requiring repairs and ultimately component replacement. The cost of repairs may be expensive and the total increase to vehicle operation cost is compounded by the loss of vehicle use while the components are being repaired or replaced.

Due to increased blade flexing and mandatory pre-failure component maintenance, the stress forces on the hub and resulting operation costs are even greater for propeller-driven aircraft. Although blade flexing is present in most propeller driven vehicles, the problem is more significant in aircraft due to the high speed of operation and the relative inconsistency of the travel medium. More blade flexing leads to greater stress on the hub and hub-to-propeller connections resulting in earlier component failure and increased replacement and repair costs. Additionally, to avoid the devastating affects of component failure during operation, aircraft primary components are typically overhauled pre-failure according to strict maintenance schedules. The period of operation between pre-failure maintenance overhauls (time between overhauls, or TBO), is based on vehicle operation time and predicted life expectancy of the particular component(s). Thus, for propeller driven aircraft, increased stress forces on the hub not only affect vehicle operation costs due to increased repair and replacement of failed components, they may also cause increased maintenance costs due to decreased TBO. Furthermore, because of the stresses that propellers endure, they typically have a much shorter life-span and a much shorter TBO of engines.

The teachings of this disclosure recognize that it is desirable to reduce vehicle operation costs and to provide an improved, more efficient motor that can be used in many types of vehicles. The following describes a reduced complexity ring motor design for propeller driven vehicles that may provide reduced operational costs and other desired features by combining the rotor and propellers of a motor into a single moving component. Combining the rotor and propellers eliminates the need to drive the propellers through the hub, thereby minimizing power lost from the motor which may increase fuel efficiency. Additionally, the disclosed embodiments may reduce motor stress on the hub, which may increase component lifetime and TBO. Furthermore, by attaching the propeller blades to a rotor support ring at the aero-center of the blades, the disclosed embodiments apply power from the motor to the propeller blades where the most torque is needed and where the most thrust from the propeller blades is supplied. Attaching the propeller blades to the rotor support ring at the aero-center of the blades may result in increased fuel efficiency, component lifetime, and TBO. For example, in embodiments that utilize an electric motor to drive a rotor support ring with propeller blades that are attached at their at aero-centers, the TBO of the motor and blades may be equal and may be practically infinite.

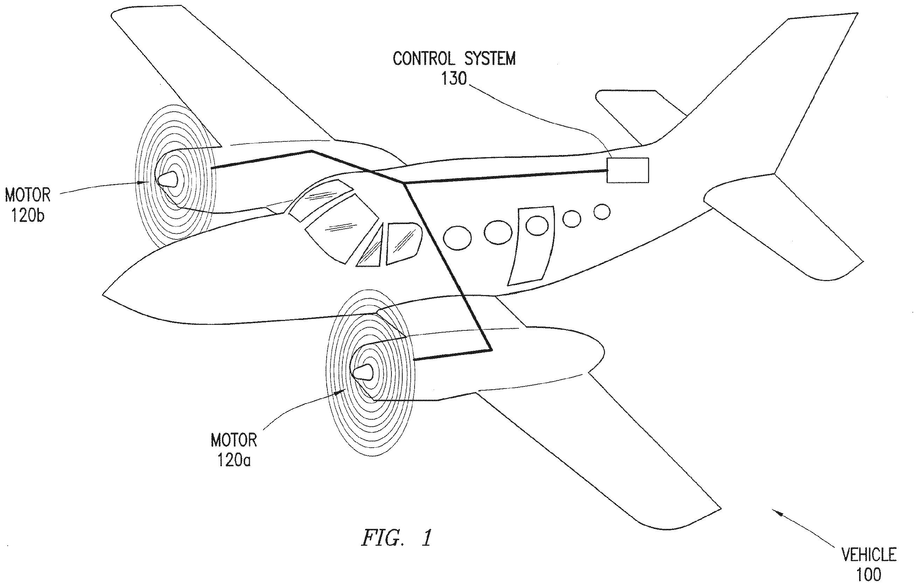

FIGURE 1 illustrates an example vehicle 100 which may utilize a reduced complexity ring motor, according to certain embodiments. Vehicle 100 may include one or more motors 120 (e.g., 120a and 120b) and a control system 130. Control system 130 is communicatively coupled to motors 120 by any suitable means. In the illustrated example, vehicle 100 is an aircraft and includes two motors: 120a and 120b. In some embodiments, vehicle 100 may be any other suitable propeller driven vehicle. As an example, and not by way of limitation, vehicle 100 may be an unmanned aerial vehicle (UAV), aircraft (e.g., airplane, helicopter, etc.), surface or subsurface watercraft, hovercraft, or any other appropriate vehicle.

In general, vehicle 100 utilizes one or more motors 120 in order to create movement. Motors 120 may be orientated in a horizontal configuration as illustrated in FIGURE 1, or they may be orientated in a vertical configuration (i.e., a helicopter, bicopter, tricopter, quadcopter, and the like). In some embodiments, control system 130 provides electrical power or control signals to one or more motors 120, causing motors 120 to rotate and create thrust. The thrust created by motors 120 causes movement of vehicle 100.

In some embodiments, vehicle 100 may include one or more motors 120 of the same size and orientation in order to provide movement in the same direction as illustrated in FIGURE 1. In other embodiments, vehicle 100 may include one or more motors 120 of different sizes and orientation in order to provide movement in either the same or different directions. As an example, motor 120a may be orientated to provide thrust resulting in forward movement of vehicle 100 while motor 120b may be orientated to provide thrust resulting in backwards movement of vehicle 100. As another example, vehicle 100 may include a large motor 120a and a small motor 120b. In this example, motor 120a may be orientated to provide thrust resulting in forward movement of vehicle 100 at a certain speed and motor 120b may be orientated to provide thrust resulting in backwards movement of vehicle 100 at a slower speed than the forward movement.

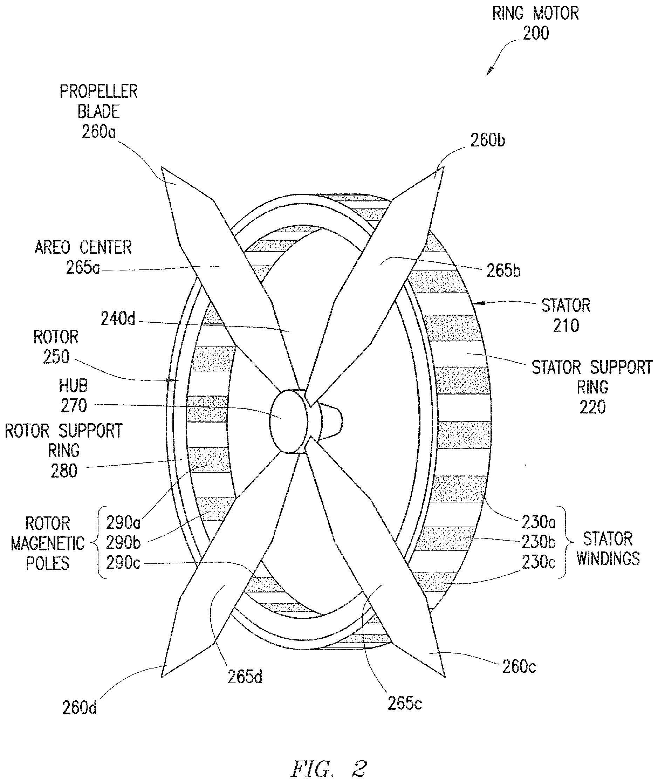

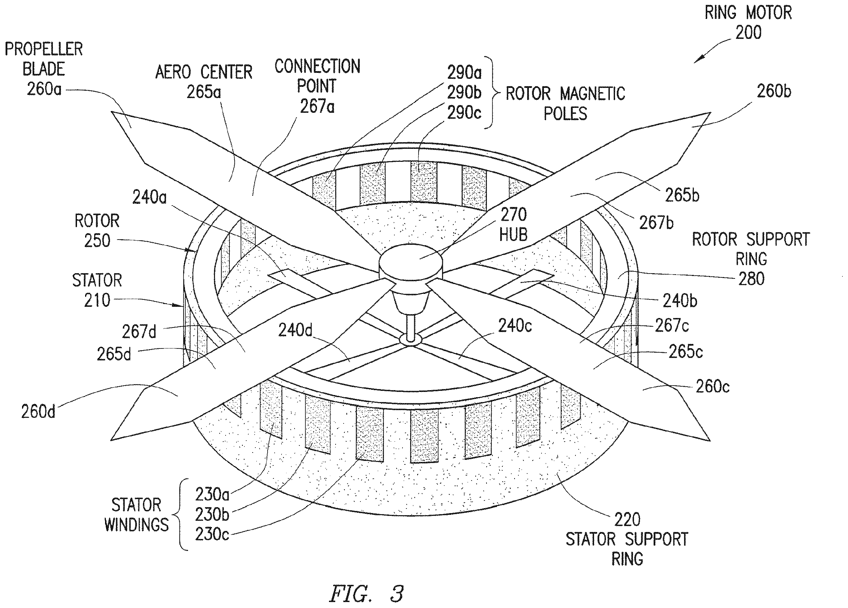

In some embodiments, vehicle 100 may include one or more motors 120 that can provide movement of vehicle 100 in multiple directions. As an example, vehicle 100 may have a single motor 120 which can provide movement in either the forward or reverse direction by rotating stator pitch blades (e.g., stator pitch blades 240a-240n described below) to direct the thrust from motor 120 to achieve movement in the desired direction. In some embodiments, one or more motors 120 may be orientated or adjustable such that the thrust created by motor 120 can be used to impede or stop movement of vehicle 100. For example, motor 120 may be used as a brake by directing the thrust created by motor 120 opposite to the direction of movement of vehicle 100. Specific embodiments of motor 120 are discussed in more detail below in reference to FIGURES 2 and 3.

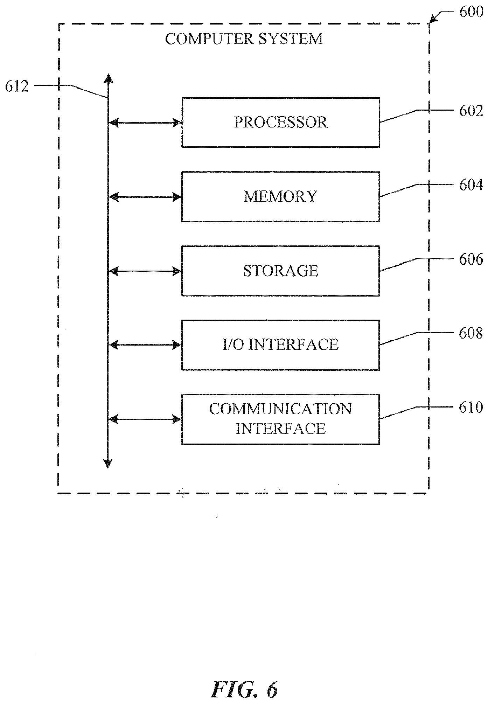

In some embodiments, control system 130 may be any suitable system in any suitable physical form that is capable of controlling the movement of vehicle 100 by providing electric power or controlling signals to motors 120. In some embodiments, control system 130 may direct the thrust produced by motors 120 by controlling the movement of one or more stator pitch blades (e.g., stator pitch blades 240a-240n). Control system 130 may be any appropriate computing system, such as computing system 600 discussed below in reference to FIGURE 6. In some embodiments, control system 130 may include specially designed hardware in addition to or instead of computing system 600. For example, control system 130 may be a remote control unit designed to direct the movement of a UAV.

FIGURES 2 and 3 illustrate a reduced complexity ring motor 200 that may be used as motor 120 of FIGURE 1. Ring motor 200 includes a stator 210, a rotor 250, and a plurality of propeller blades 260 (e.g., 260a-260d). In some embodiments, a portion of stator 210 is coupled to rotor 250 via a center rotor hub 270. In some embodiments, propeller blades 260 are coupled to rotor 250 by any appropriate means at or proximate to the aero-centers 265 (e.g., 265a-265d) of propeller blades 260, as discussed in more detail below.

In general, ring motor 200 eliminates problems and inefficiencies associated with typical motors by attaching propeller blades 260 directly to rotor 250. Electric current supplied or otherwise controlled by control system 130 provides power to a plurality of windings (i.e., stator windings 230a-230n, also called "stator magnets") of stator 210 causing rotor 250 and propeller blades 260 to rotate and create thrust. In some embodiments, the thrust may be directed by controlling and pitching a plurality of pitch blades 240 as discussed below.

In some embodiments, stator 210 may include a stator support ring 220 and stator windings 230 (i.e., 230a-230n). Although the illustrated example shows stator windings 230 attached in a complete circumference to the exterior of stator support ring 220, in some embodiments, stator windings 230 may be attached to the interior of stator support ring 220 or may be incorporated into support ring 220. Additionally, in some embodiments, stator windings 230 may include a subset of stator windings 230 that are arranged circumferentially around stator support ring 220. In such an embodiment, the subset is less than the number of stator windings 230 needed to create a complete circumference. In some embodiments, stator windings 230 may be spaced equidistantly around the support ring 220 to reduce the cost and weight of stator 210 while still allowing operation.

In some embodiments, ring motor 200 may include a plurality of pitch blades 240 (e.g., 240a-240d). In some embodiments, pitch blades 240 may be coupled to support ring 220. In some embodiments, one or more of pitch blades 240 may be rotatable and directionally controlled by control system 130. For example, pitch blades 240 may be configured to rotate about an axis that extends radially outward from a center of stator support ring 220. In other embodiments, pitch blades 240 are static and only allow thrust in a predetermined direction.

In some embodiments, rotor 250 may include a rotor support ring 280, a plurality of propeller blades 260 (e.g., 260a-260d) configured to act as a rotating propeller, and a plurality of magnetic poles 290 (e.g., 290a-290n). In some embodiments, propeller blades 260 are manufactured along with or otherwise incorporated into rotor support ring 280, thereby forming a single, uniform, unit. For example, propeller blades 260 and rotor support ring 280 may be formed together using additive manufacturing (e.g., three-dimensional printing) using any appropriate materials such as plastics or metals.

In some embodiments, each propeller blade 260 may include aero-center 265 and connection point 267. In general, aero-center 265 is the location on propeller blade 260 that allows resolution of all forces acting on propeller blade 260 (i.e., drag and applied torque) to be combined into a single force that generates movement in the desired direction. In other words, the maximum torque (rotational movement of the blade) is applied to the blade at the same point where the blade applies maximum thrust (forward movement of the entire vehicle). In some embodiments, aero-center 265 may be the location on propeller blade 260 which most efficiently converts the torque from motor 200 into thrust. By applying torque at the aero-centers 265 of propeller blades 260 instead of at hub 270, cantilever issues of typical hub-driven propellers are reduced or eliminated altogether.

Connection point 267 is a location where propeller blade 260 couples to rotor support ring 280 and may be at any suitable location along propeller blade 260. In some embodiments, propeller blades 260 do not extend substantially beyond rotor support ring 280 and the distance between connection point 267 and the tip of propeller blade 260 may be between zero to five percent of the propeller blade's total length. In some embodiments, propeller blade 260 may extend beyond rotor support ring 280 and connection point 267 may be proximate to or equal to aero-center 265 (i.e., connection point 267 and aero-center 265 may be the same location). The proximity of connection point 267 to aero-center 265 may vary considerably based on the size of vehicle 100 and system needs. In some embodiments, the distance between connection point 267 and aero-center 265 may be five to ten percent of the total length of propeller blade 260. In other embodiments, the distance between connection point 267 and aero-center 265 may be one to five percent, or zero to one percent of the total length of propeller blade 260.

In some embodiments, a center portion of stator 210 is coupled to rotor hub 270, which is also coupled to (or a part of) rotor 250. In some embodiments, stator 210 may be coupled to hub 270 via a rigid connection such as a rod and bearing connection.

In some embodiments, rotor magnetic poles 290 are attached in a complete circumference to the interior of rotor support ring 280. In some embodiments, rotor magnetic poles 290 may be attached to the exterior of support ring 280 or may be incorporated into rotor support ring 280. In some embodiments, rotor magnetic poles 290 may include a subset of magnetic poles that are arranged circumferentially around rotor support ring 280. In such an embodiment, the subset is less than the number of rotor magnetic poles 290 needed to create a complete circumference. In some embodiments, rotor magnetic poles 290 may be spaced equidistantly around rotor support ring 280 in order to reduce the cost and weight of rotor 250 while still allowing operation.

In some embodiments, components of ring motor 200 (e.g., stator 210, rotor 250, and propeller blades 260) may be scaled together or separately in order to have any desired thrust for any desired application. For example, ring motor 200 may have an appropriate scale for manned aircraft and for smaller unmanned UAVs. In some embodiments, two or more ring motors 200 may be utilized to create the desired thrust. This disclosure anticipates any appropriate number, size, and orientation of ring motors 200 being utilized by any propeller driven vehicle.

In operation, control system 130 provides or otherwise controls electrical power to stator windings 230 of stator 210 to induce magnetic fields onto rotor magnetic poles 290, thereby causing rotor 250 to rotate. The rotation of rotor 250 causes propeller blades 260 to rotate, thereby creating thrust. In some embodiments, pitch blades 240 control or direct the thrust to produce movement of vehicle 100. In some embodiments, one or more of pitch blades 240 may be rotatable and directionally controlled by control system 130 in order to allow multi-directional or multi-dimensional movement of vehicle 100. In some embodiments, multi-directional or multi-dimensional movement may also be produced by utilizing multiple ring motors 200 of different or similar sizes as described above.

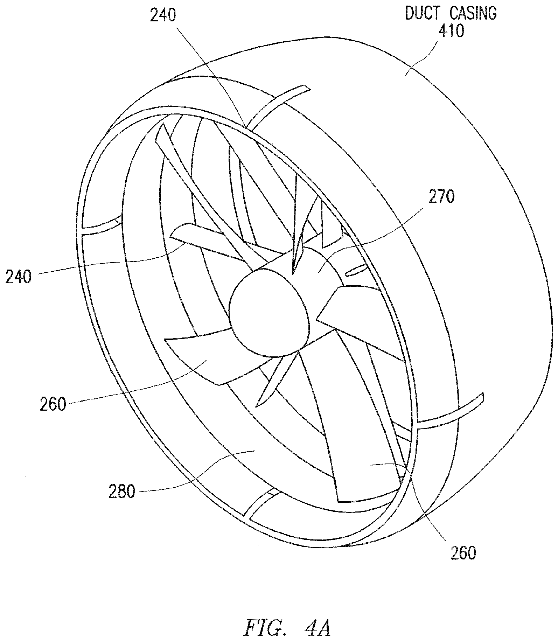

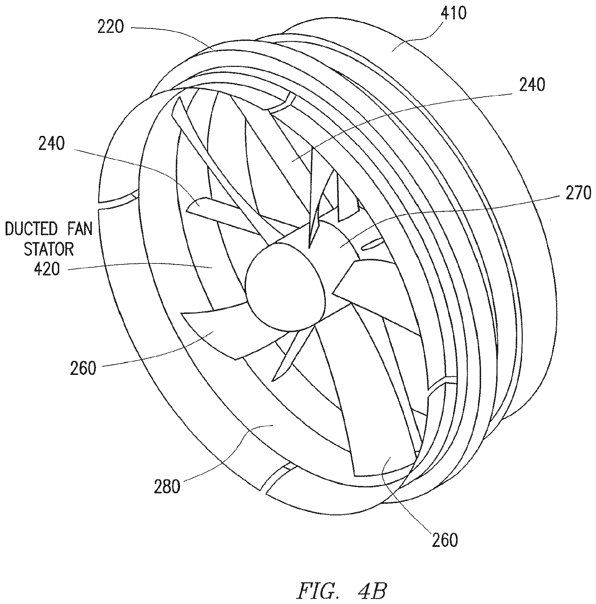

FIGURES 4A and 4B illustrate another embodiment of a reduced complexity ring motor 400 that may be used as motor 120 of FIGURE 1. Like ring motor 200 described above, ring motor 400 includes a stator support ring 220, a rotor support ring 280, a plurality of propeller blades 260, a center rotor hub 270, and a plurality of stator pitch blades 240. In addition, motor 400 also includes a duct casing 410 which provides a covering to protect components of motor 400. Furthermore, unlike motor 200 in FIGURES 2 and 3 where stator pitch blades 240 are coupled to stator support ring 220, the stator pitch blades 240 of motor 400 are coupled to a ducted fan stator 420 that may be separate from stator support ring 220.

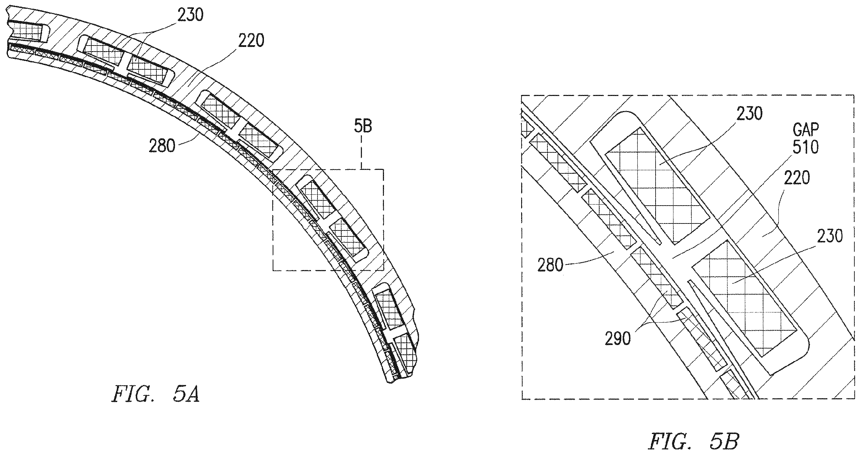

FIGURES 5A and 5B illustrate embodiments of a rotor support ring 280 and a stator support ring 220 that may be used in the reduced complexity ring motors 200 and 400 of FIGURES 2, 3, 4A, and 4B. As described above and illustrated in more detail in FIGURES 5A and 5B, stator support ring 220 includes stator windings 230, and rotor support ring 280 includes rotor magnetic poles 290. In some embodiments, stator windings 230 may be solenoids, and rotor magnetic poles 290 may be permanent magnets. In some embodiments, rotor magnetic poles 290 may have a width of approximately 12 mm. In some embodiments, the distance between rotor magnetic poles 290 and the edge of rotor support ring 280 that is closest to stator support ring 220 may be approximately 1 mm.

In some embodiments, stator windings 230 may be housed in a cavity within stator support ring 220 that includes a gap 510, as illustrated in FIGURES 5A and 5B. In some embodiments, portions of stator support ring 220 surrounding gap 510 may be tapered as illustrated. In general, all magnetic field lines are contained within stator support ring 220 and rotor support ring 280, which may be made of a ferromagnetic material such as cast iron. These magnetic field lines cannot escape except through gap 510. By tapering the openings around gap 510, the area over which the magnetic field lines interact is increased and the magnetic field lines are more effectively guided into the cavity housing stator windings 230. This, along with keeping the gap between rotor support ring 280 and stator support ring 220 as small as possible, helps increase the efficiency of motors 200 and 400.

FIGURE 6 illustrates an example computer system 600. Computer system 600 may be utilized by control system 130 of FIGURE 1. In particular embodiments, one or more computer systems 600 perform one or more steps of one or more methods described or illustrated herein. In particular embodiments, one or more computer systems 600 provide functionality described or illustrated herein. In particular embodiments, software running on one or more computer systems 600 performs one or more steps of one or more methods described or illustrated herein or provides functionality described or illustrated herein. Particular embodiments include one or more portions of one or more computer systems 600. Herein, reference to a computer system may encompass a computing device, and vice versa, where appropriate. Moreover, reference to a computer system may encompass one or more computer systems, where appropriate.

This disclosure contemplates any suitable number of computer systems 600. This disclosure contemplates computer system 600 taking any suitable physical form. As example and not by way of limitation, computer system 600 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 600 may include one or more computer systems 600; be unitary or distributed; span multiple locations; span multiple machines; span multiple data centers; or reside in a cloud, which may include one or more cloud components in one or more networks. Where appropriate, one or more computer systems 600 may perform without substantial spatial or temporal limitation one or more steps of one or more methods described or illustrated herein. As an example and not by way of limitation, one or more computer systems 600 may perform in real time or in batch mode one or more steps of one or more methods described or illustrated herein. One or more computer systems 600 may perform at different times or at different locations one or more steps of one or more methods described or illustrated herein, where appropriate.

In particular embodiments, computer system 600 includes a processor 602, memory 604, storage 606, an input/output (I/O) interface 608, a communication interface 610, and a bus 612. Although this disclosure describes and illustrates a particular computer system having a particular number of particular components in a particular arrangement, this disclosure contemplates any suitable computer system having any suitable number of any suitable components in any suitable arrangement.

In particular embodiments, processor 602 includes hardware for executing instructions, such as those making up a computer program. As an example and not by way of limitation, to execute instructions, processor 602 may retrieve (or fetch) the instructions from an internal register, an internal cache, memory 604, or storage 606; decode and execute them; and then write one or more results to an internal register, an internal cache, memory 604, or storage 606. In particular embodiments, processor 602 may include one or more internal caches for data, instructions, or addresses. This disclosure contemplates processor 602 including any suitable number of any suitable internal caches, where appropriate. As an example and not by way of limitation, processor 602 may include one or more instruction caches, one or more data caches, and one or more translation lookaside buffers (TLBs). Instructions in the instruction caches may be copies of instructions in memory 604 or storage 606, and the instruction caches may speed up retrieval of those instructions by processor 602. Data in the data caches may be copies of data in memory 604 or storage 606 for instructions executing at processor 602 to operate on; the results of previous instructions executed at processor 602 for access by subsequent instructions executing at processor 602 or for writing to memory 604 or storage 606; or other suitable data. The data caches may speed up read or write operations by processor 602. The TLBs may speed up virtual-address translation for processor 602. In particular embodiments, processor 602 may include one or more internal registers for data, instructions, or addresses. This disclosure contemplates processor 602 including any suitable number of any suitable internal registers, where appropriate. Where appropriate, processor 602 may include one or more arithmetic logic units (ALUs); be a multi-core processor; or include one or more processors 602. Although this disclosure describes and illustrates a particular processor, this disclosure contemplates any suitable processor.

In particular embodiments, memory 604 includes main memory for storing instructions for processor 602 to execute or data for processor 602 to operate on. As an example and not by way of limitation, computer system 600 may load instructions from storage 606 or another source (such as, for example, another computer system 600) to memory 604. Processor 602 may then load the instructions from memory 604 to an internal register or internal cache. To execute the instructions, processor 602 may retrieve the instructions from the internal register or internal cache and decode them. During or after execution of the instructions, processor 602 may write one or more results (which may be intermediate or final results) to the internal register or internal cache. Processor 602 may then write one or more of those results to memory 604. In particular embodiments, processor 602 executes only instructions in one or more internal registers or internal caches or in memory 604 (as opposed to storage 606 or elsewhere) and operates only on data in one or more internal registers or internal caches or in memory 604 (as opposed to storage 606 or elsewhere). One or more memory buses (which may each include an address bus and a data bus) may couple processor 602 to memory 604. Bus 612 may include one or more memory buses, as described below. In particular embodiments, one or more memory management units (MMUs) reside between processor 602 and memory 604 and facilitate accesses to memory 604 requested by processor 602. In particular embodiments, memory 604 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 604 may include one or more memories 604, where appropriate. Although this disclosure describes and illustrates particular memory, this disclosure contemplates any suitable memory.

In particular embodiments, storage 606 includes mass storage for data or instructions. As an example and not by way of limitation, storage 606 may include a hard disk drive (HDD), a floppy disk drive, flash memory, an optical disc, a magneto-optical disc, magnetic tape, or a Universal Serial Bus (USB) drive or a combination of two or more of these. Storage 606 may include removable or non-removable (or fixed) media, where appropriate. Storage 606 may be internal or external to computer system 600, where appropriate. In particular embodiments, storage 606 is non-volatile, solid-state memory. In particular embodiments, storage 606 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 606 taking any suitable physical form. Storage 606 may include one or more storage control units facilitating communication between processor 602 and storage 606, where appropriate. Where appropriate, storage 606 may include one or more storages 606. Although this disclosure describes and illustrates particular storage, this disclosure contemplates any suitable storage.

In particular embodiments, I/O interface 608 includes hardware, software, or both, providing one or more interfaces for communication between computer system 600 and one or more I/O devices. Computer system 600 may include one or more of these I/O devices, where appropriate. One or more of these I/O devices may enable communication between a person and computer system 600. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 608 for them. Where appropriate, I/O interface 608 may include one or more device or software drivers enabling processor 602 to drive one or more of these I/O devices. I/O interface 608 may include one or more I/O interfaces 608, where appropriate. Although this disclosure describes and illustrates a particular I/O interface, this disclosure contemplates any suitable I/O interface.

In particular embodiments, communication interface 610 includes hardware, software, or both providing one or more interfaces for communication (such as, for example, packet-based communication) between computer system 600 and one or more other computer systems 600 or one or more networks. As an example and not by way of limitation, communication interface 610 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 610 for it. As an example and not by way of limitation, computer system 600 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 600 may include any suitable communication interface 610 for any of these networks, where appropriate. Communication interface 610 may include one or more communication interfaces 610, where appropriate. Although this disclosure describes and illustrates a particular communication interface, this disclosure contemplates any suitable communication interface.

In particular embodiments, bus 612 includes hardware, software, or both coupling components of computer system 600 to each other. As an example and not by way of limitation, bus 612 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 612 may include one or more buses 612, where appropriate. Although this disclosure describes and illustrates a particular bus, this disclosure contemplates any suitable bus or interconnect.

The components of computer system 600 may be integrated or separated. In some embodiments, components of computer system 600 may each be housed within a single chassis. The operations of computer system 600 may be performed by more, fewer, or other components. Additionally, operations of computer system 600 may be performed using any suitable logic that may comprise software, hardware, other logic, or any suitable combination of the preceding.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate. Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A motor (200) comprising:
a stator (210) comprising:
a stator support ring (220) comprising a plurality of windings (230) arranged circumferentially around the stator support ring (220); and
a rotor (250) configured as a rotating propeller, the rotor (250) comprising:
a center hub (270) configured to couple to a portion of the stator (210);
a rotor support ring (280) comprising a plurality of magnetic poles (290) arranged circumferentially around the rotor support ring (280); and
a plurality of blades (260), each particular blade (260) of the plurality of blades (260) being coupled to the rotor support ring (280),
**characterized in that**
the plurality of blades (260) coupled to the rotor support ring (280) are coupled proximate to an aero-center (265) of the particular blade (260).

2. The motor of claim 1, wherein each of the plurality of blades (160) is coupled to the rotor support ring (280) at a distance from the aero-center (265) of the particular blade (160) of 10 percent or less of a length of the particular blade (160).

3. The motor of claim 1 or 2, further comprising a control system (130) configured to cause the rotor (250) to rotate by controlling electrical power to the plurality of windings (230) of the stator (210).

4. The motor of claim 1 or 2, wherein the stator (210) further comprises a plurality of pitch blades (240) coupled to the stator support ring (220).

5. The motor of claim 4, wherein the plurality of pitch blades (240) of the stator (210) are configured to rotate about an axis extending radially from a center of the stator support ring (220).

6. The motor of claim 5, further comprising a control system (130) configured to control the movements of the plurality of pitch blades (240).

7. The motor of any one of the preceding claims, wherein the plurality of blades (260) and the rotor support ring (280) are manufactured as a single unit using additive manufacturing.

8. The motor of any one of the preceding claims, wherein the center hub (270) is configured to couple to a center portion of the stator (210) via a rigid connection.

9. The motor of claim 8, wherein the rigid connection comprises a rod and bearing connection.

10. A vehicle (100), comprising:
one or more motors (200) according to claim 1 or 2, and
a control system (130) configured to control thrust produced by the one or more motors (200) by controlling electrical power to the plurality of windings (230) of the stator (210).

11. The vehicle of claim 10, wherein the vehicle (100) is a submarine, a hovercraft, an unmanned aerial vehicle (UAV), an unmanned surface vehicle, or an unmanned subsurface vehicle.

12. The vehicle of claim 10, wherein the vehicle is an aircraft or a watercraft.

13. The vehicle of any one of claims 10 to 12, wherein the stator (210) further comprises a plurality of pitch blades (240) coupled to the stator support ring (220).

14. The vehicle of claim 13, wherein:
the plurality of pitch blades (240) of the stator (210) are configured to rotate about an axis extending radially from a center of the stator support ring (220); and
the control system (130) is further operable to control the movements of the plurality of pitch blades (240).

15. The vehicle of any one of claims 10 to 14, wherein the center hub (270) comprises a rod and bearing connection.

## Patentansprüche

1. Motor (200), umfassend:
einen Stator (210), umfassend:
einen Statorhaltering (220), der eine Vielzahl an Wicklungen (230) umfasst, die den Statorhaltering (220) umlaufend angeordnet sind; und
einen Rotor (250), gestaltet als ein rotierender Propeller, wobei der Rotor (250) umfasst:
eine Mittelnabe (270), gestaltet, um mit einem Abschnitt des Stators (210) zu koppeln;
einen Rotorhaltering (280), der eine Vielzahl magnetischer Pole (290) umfasst, die den Rotorhaltering (280) umlaufend angeordnet sind; und
eine Vielzahl an Blättern (260), wobei jedes jeweilige Blatt (260) aus der Vielzahl an Blättern (260) mit dem Rotorhaltering (280) gekoppelt ist,
**dadurch gekennzeichnet, dass**
die Vielzahl an Blättern (260), die mit dem Rotorhaltering (280) gekoppelt ist, in der Nähe eines Aerozentrums (265) (aero-center) des jeweiligen Blattes (260) gekoppelt ist.

2. Motor nach Anspruch 1, wobei jedes Blatt aus der Vielzahl an Blättern (160) in einem Abstand von 10 Prozent oder weniger der Länge des jeweiligen Blattes (160) von dem Aerozentrum (265) des jeweiligen Blattes (160) mit dem Rotorhaltering (280) gekoppelt ist.

3. Motor nach Anspruch 1 oder 2, der des Weiteren ein Steuersystem (130) umfasst, das gestaltet ist, den Rotor (250) zu veranlassen, sich zu drehen, indem es die elektrische Energie zu der Vielzahl an Wicklungen (230) des Stators (210) steuert.

4. Motor nach Anspruch 1 oder 2, wobei der Stator (210) des Weiteren eine Vielzahl an Verstellblättern (240) (pitch blades) umfasst, die mit dem Statorhaltering (220) gekoppelt ist.

5. Motor nach Anspruch 4, wobei die Vielzahl an Verstellblättern (240) des Stators (210) gestaltet ist, um sich um eine Achse zu drehen, die sich radial von einem Zentrum des Statorhalterings (220) erstreckt.

6. Motor nach Anspruch 5, der des Weiteren ein Steuersystem (130) umfasst, gestaltet, um die Bewegungen der Vielzahl an Verstellblättern (240) zu steuern.

7. Motor nach einem der vorstehenden Ansprüche, wobei die Vielzahl an Blättern (260) und der Rotorhaltering (280) als eine einzelne Einheit unter Anwendung einer additiven Herstellung gefertigt werden.

8. Motor nach einem der vorstehenden Ansprüche, wobei die Mittelnabe (270) gestaltet ist, um mittels einer starren Verbindung an eine Mittelposition des Stators (210) zu koppeln.

9. Motor nach Anspruch 8, wobei die starre Verbindung eine Stange und eine Lagerverbindung umfasst.

10. Fahrzeug (100), umfassend:
einen oder mehrere Motoren (200) nach Anspruch 1 oder 2, und
ein Steuersystem (130), gestaltet, um die von dem einen oder den mehreren Motoren (200) erzeugte Schubkraft zu steuern, indem es die elektrische Energie zu der Vielzahl an Wicklungen (230) des Stators (210) steuert.

11. Fahrzeug nach Anspruch 10, wobei das Fahrzeug (100) ein U-Boot, ein Luftkissenfahrzeug, ein unbemanntes Luftfahrzeug (UAV: unmanned aerial vehicle), ein unbemanntes Oberflächenfahrzeug oder ein unbemanntes Untergrundfahrzeug ist.

12. Fahrzeug nach Anspruch10, wobei das Fahrzeug ein Luftfahrzeug oder ein Wasserfahrzeug ist.

13. Fahrzeug nach einem der Ansprüche 10 bis 12, wobei der Stator (210) des Weiteren eine Vielzahl an Verstellblättern (240) umfasst, die mit dem Statorhaltering (220) gekoppelt ist.

14. Fahrzeug nach Anspruch 13, wobei
die Vielzahl an Verstellblättern (240) des Stators (210) gestaltet ist, um sich um eine Achse zu drehen, die sich radial von der Mitte des Statorhalterings (220) erstreckt; und das Steuersystem (130) des Weiteren betrieben werden kann, um die Bewegungen der Vielzahl an Verstellblättern (240) zu steuern.

15. Fahrzeug nach einem der Ansprüche 10 bis 14, wobei die Mittelnabe (270) eine Stange und eine Lagerverbindung umfasst.

## Revendications

1. Moteur (200), comprenant :
un stator (210), comprenant :
un anneau de support de stator (220) comprenant une pluralité de bobinages (230) disposés circonférentiellement autour de l'anneau de support de stator (220) ; et
un rotor (250) configuré en tant qu'hélice rotative, le rotor (250) comprenant :
un pivot central (270) configuré pour se coupler à une partie du stator (210) ;
un anneau de support de rotor (280) comprenant une pluralité de pôles magnétiques (290) disposés circonférentiellement autour de l'anneau de support de rotor (280) ; et
une pluralité de pales (260), chaque pale particulière (260) de la pluralité de pales (260) étant couplée à l'anneau de support de rotor (280),
**caractérisé en ce que**
la pluralité de pales (260) couplées à l'anneau de support de rotor (280) sont couplées à proximité d'un centre aérodynamique (265) de la pale particulière (260) .

2. Le moteur de la revendication 1, dans lequel chacune de la pluralité de pales (160) est couplée à l'anneau de support de rotor (280) à une distance du centre aérodynamique (265) de la pale particulière (160) de 10 pour cent ou moins d'une longueur de la pale particulière (160).

3. Le moteur de la revendication 1 ou 2, comprenant en outre un système de contrôle (130) configuré pour faire tourner le rotor (250) en contrôlant une alimentation électrique vers la pluralité de bobinages (230) du stator (210).

4. Le moteur de la revendication 1 ou 2, dans lequel le stator (210) comprend en outre une pluralité de pales à pas (240) couplées à l'anneau de support de stator (220) .

5. Le moteur de la revendication 4, dans lequel la pluralité de pales à pas (240) du stator (210) sont configurés pour tourner autour d'un axe s'étendant radialement depuis un centre de l'anneau de support de stator (220).

6. Le moteur de la revendication 5, comprenant en outre un système de contrôle (130) configuré pour contrôler les mouvements de la pluralité de pales à pas (240).

7. Le moteur de l'une quelconque des revendications précédentes, dans lequel la pluralité de pales (260) et l'anneau de support de rotor (280) sont fabriqués en tant qu'unité unique en utilisant une fabrication additive.

8. Le moteur de l'une quelconque des revendications précédentes, dans lequel le pivot central (270) est configuré pour se coupler à une partie centrale du stator (210) via une connexion rigide.

9. Le moteur de la revendication 8, dans lequel la connexion rigide comprend une tige et une connexion de palier.

10. Véhicule (100), comprenant :
un ou plusieurs moteurs (200) selon la revendication 1 ou 2, et
un système de contrôle (130) configuré pour contrôler une poussée produite par l'un ou plusieurs moteurs (200) en contrôlant l'alimentation électrique vers la pluralité de bobinages (230) du stator (210).

11. Le véhicule de la revendication 10, dans lequel le véhicule (100) est un sous-marin, un aéroglisseur, un drone aérien, un drone de surface ou un drone de sous-surface.

12. Le système de la revendication 10, dans lequel le véhicule est un véhicule aérien ou aquatique.

13. Le moteur de l'une quelconque des revendications 10 à 12, dans lequel le stator (210) comprend en outre une pluralité de pales à pas (240) couplées à l'anneau de support de stator (220).

14. Le procédé de la revendication 13, dans lequel :
La pluralité de pales à pas (240) du stator (210) sont configurées pour tourner autour d'un axe s'étendant radialement depuis un centre de l'anneau de support de stator (220) ; et
le système de contrôle (130) est exploitable en outre pour contrôler les mouvements de la pluralité de pales à pas (240).

15. Le dispositif de l'une quelconque des revendications 10 à 14, dans lequel le pivot central (270) comprend une tige et une connexion de palier.
